# EUROPEAN PATENT SPECIFICATION

(11) **EP 3 761 337 B1**
(45) Date of publication and mention of the grant of the patent: **04.12.2024**
(21) Application number: 18907548.4
(22) Date of filing: 27.02.2018
(51) Int. Cl.: H01H 33/666, H01H 33/38

(54) **ELECTROMAGNETIC ACTUATOR, SWITCH, AND SWITCH GEAR**
ELEKTROMAGNETISCHER BETÄTIGER, SCHALTER UND SCHALTGETRIEBE
ACTIONNEUR ÉLECTROMAGNÉTIQUE, COMMUTATEUR ET DISPOSITIF DE COMMUTATION

(43) Date of publication of application: 06.01.2021
(73) Proprietor: Mitsubishi Electric Corporation, Tokyo 100-8310 (JP)
(72) Inventor: KAI, Takayuki, Tokyo 100-8310 (JP); KANEMARU, Makoto, Tokyo 100-8310 (JP); KIMURA, Toru, Tokyo 100-8310 (JP)
(74) Representative: Witte, Weller & Partner Patentanwälte mbB
(86) International application number: PCT/JP2018/007120
(87) International publication number: WO 2019/167103

(56) References cited:
- DE-T2- 69 731 020
- JP-A- 2000 251 589
- JP-A- 2000 331 576
- JP-A- 2006 260 860
- JP-A- 2008 153 172
- JP-A- 2008 166 085

## Description

### TECHNICAL FIELD

The present disclosure relates to an electromagnetic actuator, a switch which is opened/closed by an electromagnetic actuator, and a switchgear provided with the switch.

### BACKGROUND ART

In the case where an internal arc occurs due to short-circuit in a distribution board, the internal arc continues occurring until a circuit breaker of a high-order system operates, and therefore there is a possibility that the board is significantly damaged.

Accordingly, an internal arc protection system is developed in which an internal arc in a power reception distribution board is detected at high speed and grounding is performed at high speed so as to eliminate the internal arc, thereby suppressing damage on the board due to the internal arc. As a high-speed grounding switch used in such an internal arc protection system, a high-speed actuator using gunpowder is known, but this can operate only once.

Meanwhile, an internal arc protection system using an electromagnetic actuator capable of operating a plurality of times is known (for example, Patent Document 1).

Also, a circuit breaker provided with an electromagnetic actuator capable of operating contacts at high speed and a plurality of times is described in Patent Document 2, for example. In an opening operation, when a first coil is energized, operation is performed in the opening direction by an electromagnetic force generated on a repulsive plate, a closing spring is compressed, and a movable core connected to a movable shaft is retained by a retention mechanism. In a closing operation, when a second coil is energized, an attracting force from a permanent magnet of the retention mechanism is canceled out so that the retention is released and the movable core moves in the closing direction by the closing spring.

Further, Patent Document 3 discloses another electromagnetic actuator for circuit breaker capable of operating at high speed. At the time of operation (opening), first and second coils are excited, and eddy current is generated in a repulsive plate located close to the first coil. Then, a magnetic field of the first coil and a magnetic field due to the eddy current repel each other, whereby a movable shaft connected to the repulsive plate is driven in the closing direction. The distance between a movable core and a fixed core is decreased by the driving of the movable shaft, and the movable core comes into contact with the fixed core by an electromagnetic force of the second coil. Patent Document 4, according to its abstract, states that in a switchgear, by using a spring with a varying spring constant from closing to electrode opening as a loading spring, spring load in the opened electrode state is made smaller than a spring load in the closed electrode state to decrease the energy required from electrode closing up to electrode opening. Moreover, by using a spring in which a load in the opposite direction to a load in the closed electrode state works in the opened electrode state, the opened electrode state can be held securely.

### CITATION LIST

### PATENT DOCUMENT

Patent Document 1: Japanese Laid-Open Patent Publication No. 2010-135323
Patent Document 2: Japanese Laid-Open Patent Publication No. 2002-343200 (FIG. 1)
Patent Document 3: Japanese Laid-Open Patent Publication No. 2006-260860 (FIG. 1)
Patent Document 4: DE 697 31 020 T2

### SUMMARY OF THE INVENTION

### PROBLEMS TO BE SOLVED BY THE INVENTION

In Patent Document 1, a high-speed closing switch is realized, and in addition, in order to reduce impact and noise that occur at the time of high-speed closing (electrode closing), a damper hole is provided so that the impact is absorbed by gas inside a case. Therefore, a bar-shaped movable electrode and a cylindrical fixed electrode having a damper hole corresponding thereto are provided, leading to a large-sized and complex structure.

In both Patent Document 2 and Patent Document 3, to achieve high-speed operation, a power supply for pulse current is increased in size or a rebound between electrodes which occurs at the time of closing becomes great.

In particular, in Patent Document 3, operation mainly refers to interruption (opening), and in the case of application to closing operation, chattering that occurs at the time of closing is not taken into consideration.

The present disclosure has been made to solve the above problems, and an object of the present disclosure is to achieve high-speed operation of a switch with a simple structure and suppress chattering that occurs due to high-speed operation.

### SOLUTION TO THE PROBLEMS

There is provided an electromagnetic actuator as defined in claim 1.

There is further provided a switch as defined in claim 3.

There is further provided a switchgear as defined in claim 5.

### EFFECT OF THE INVENTION

Owing to the above configurations, high-speed operation of an electromagnetic actuator can be achieved with a simple structure, a switch can be operated at high speed by the electromagnetic actuator, and chattering can be suppressed.

### BRIEF DESCRIPTION OF THE DRAWINGS

[FIG. 1A] FIG. 1A is a structure view showing an opened state of a switch according to embodiment 1.
[FIG. 1B] FIG. 1B is a structure view showing a closed state of the switch according to embodiment 1.
[FIG. 2] FIG. 2 shows changes over time in current flowing through a coil, displacement of a movable electrode, and electromagnetic forces generated on a repulsive plate and a movable core.
[FIG. 3A] FIG. 3A is a structure view showing an opened state of a switch according to embodiment 2.
[FIG. 3B] FIG. 3B is a structure view showing a closed state of the switch according to embodiment 2.
[FIG. 4A] FIG. 4A is a structure view showing an opened state of a switch according to embodiment 3.
[FIG. 4B] FIG. 4B is a structure view showing a closed state of the switch according to embodiment 3.
[FIG. 5A] FIG. 5A is a partial structure view showing an opened state of a switch according to embodiment 4.
[FIG. 5B] FIG. 5B is a partial structure view showing a closed state of the switch according to embodiment 4.
[FIG. 5C] FIG. 5C is a partial structure view showing a closed state of the switch according to embodiment 4.
[FIG. 5D] FIG. 5D is a partial structure view showing an opened state of the switch according to embodiment 4.
[FIG. 5E] FIG. 5E is a partial structure view showing an opened state of the switch according to embodiment 4.
[FIG. 6A] FIG. 6A is a partial structure view showing an opened state of another switch according to embodiment 4.
[FIG. 6B] FIG. 6B is a partial structure view showing a closed state of the other switch according to embodiment 4.
[FIG. 7] FIG. 7 is a schematic structure view of a switchgear according to embodiment 5.
[FIG. 8] FIG. 8 is a schematic structure view of another switchgear according to embodiment 5.

### DESCRIPTION OF EMBODIMENTS

Hereinafter, embodiments will be described with reference to the drawings. In the drawings, the same reference characters denote the same or corresponding parts.

### Embodiment 1

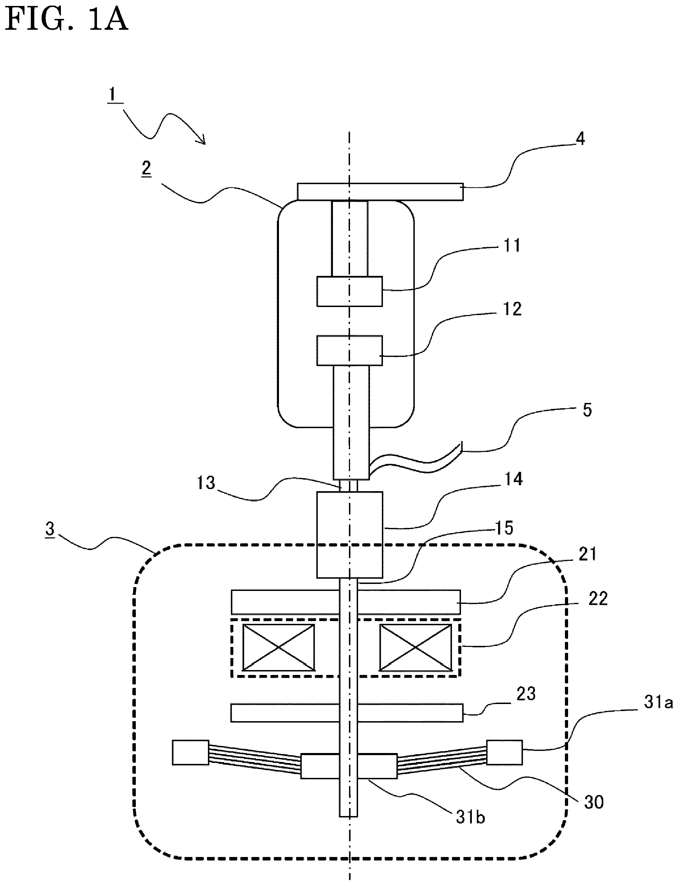

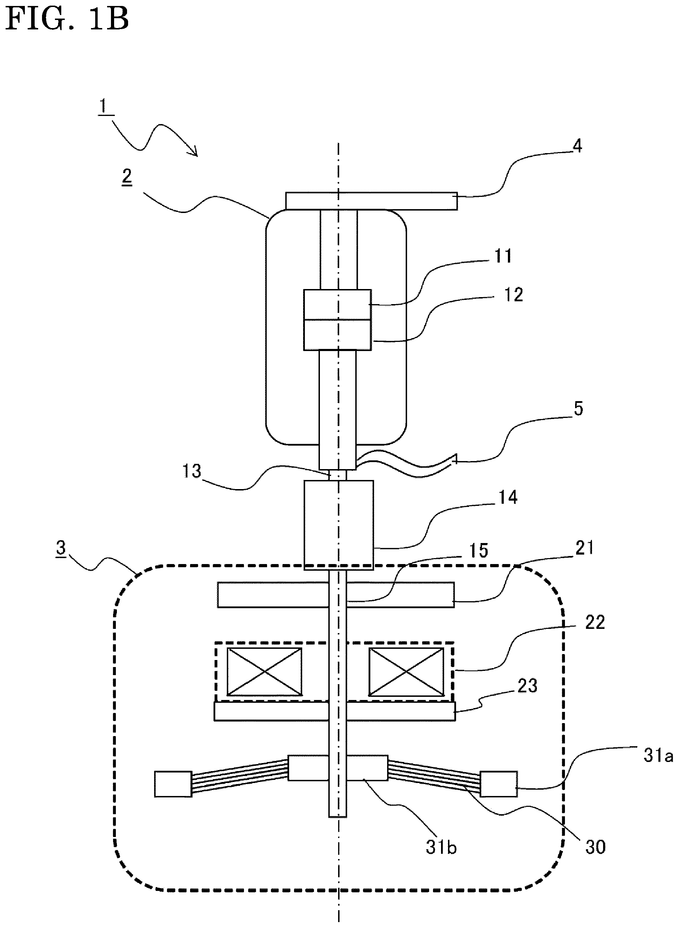

FIG. 1A and FIG. 1B are structure views of a switch according to embodiment 1. FIG. 1A shows an opened state, and FIG. 1B shows a closed state.

In FIG. 1A and FIG. 1B, a switch 1 includes: a vacuum switch 2 having, inside a vacuum container, a fixed electrode 11 and a movable electrode 12 contactable with and separable from the fixed electrode 11 to form a closed/opened state; and an electromagnetic actuator 3 for driving a first movable shaft 13 having an end connected to the movable electrode 12 so as to open/close the vacuum switch.

A terminal 4 and a terminal 5 are provided outside the vacuum switch 2. The terminal 4 is connected to a fixed end of the fixed electrode 11, and the terminal 5 is connected to the first movable shaft 13. The terminal 4 and the terminal 5 respectively serve as a high-voltage-side terminal and a ground-side terminal when the vacuum switch 2 is used for opening/closing the circuit.

The electromagnetic actuator 3 has a second movable shaft 15 connected to the first movable shaft 13 via an insulating connection rod 14, and in the electromagnetic actuator 3, a repulsive plate 21, a coil 22, a movable core 23, and a disk spring 30 which is an elastic member are arranged in this order from the vacuum switch 2 side.

The repulsive plate 21 is connected to the second movable shaft 15 and moves in the axial direction together with the second movable shaft 15. With a hollow part of the coil 22 interposed between the repulsive plate 21 and the movable core 23, the movable core 23 is connected to the second movable shaft 15. The movable core 23 also moves in the axial direction together with the second movable shaft 15.

In the opened state shown in FIG. 1A, the distance between the repulsive plate 21 and the coil 22 is set to be shorter than the distance between the movable core 23 and the coil 22. In the closed state shown in FIG. 1B, the distance between the repulsive plate 21 and the coil 22 is set to be longer than the distance between the movable core 23 and the coil 22.

The disk spring 30 has an outer peripheral end fixed to a spring fixation member 31a, and an inner peripheral end fixed to the second movable shaft 15 by a spring fixation member 31b. In the opened state shown in FIG. 1A, the second movable shaft 15 is pressed by the disk spring 30 so as to move away from the vacuum switch 2. In the closed state shown in FIG. 1B, the second movable shaft 15 is pressed by the disk spring 30 so as to come close to the vacuum switch 2, thus serving to retain the fixed electrode 11 and the movable electrode 12 in the vacuum switch 2 so that they are not separated from each other.

Next, operation of the electromagnetic actuator 3 will be described.

First, in the opened state shown in FIG. 1A, when high-frequency pulse current is applied to the coil 22, a magnetic field is generated, and due to the magnetic field, eddy current is generated in the repulsive plate 21 located close to the coil 22. A magnetic field due to the eddy current generated in the repulsive plate 21 has such a direction as to cancel out the magnetic field generated on the coil 22, i.e., a direction opposite to the magnetic field generated on the coil. Thus, the repulsive plate 21 moves in a direction to separate from the coil 22. Accordingly, by an electromagnetic force generated on the repulsive plate 21, the repulsive plate 21 and the second movable shaft 15 connected to the repulsive plate 21 move in the closing direction. When the repulsive plate 21 is separated from the coil, the electromagnetic force on the repulsive plate 21 is reduced.

An electromagnetic force from the coil 22 acts so as to attract the movable core 23 toward the coil 22. In the opened state, since the distance between the movable core 23 and the coil 22 is great, the electromagnetic force generated on the movable core 23 is small, and through movement of the repulsive plate 21, as the distance between the movable core 23 and the coil 22 decreases, the electromagnetic force generated on the movable core 23 increases.

In the opened state, the second movable shaft 15 is fixed by the disk spring 30, and after the coil 22 is energized, when the movable shaft 15 is moved by a predetermined distance, the disk spring 30 is reversed and presses the second movable shaft 15 toward the closing side as shown in FIG. 1B.

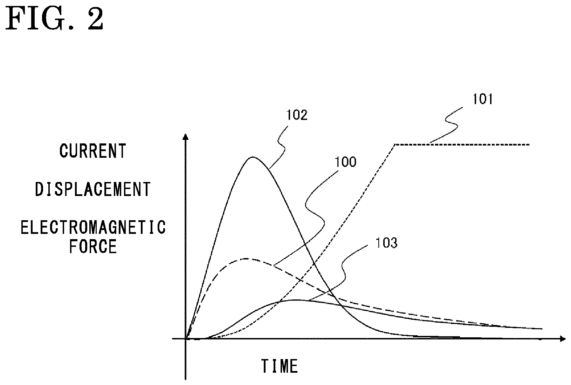

FIG. 2 shows changes over time in current flowing through the coil, displacement of the movable electrode, and electromagnetic forces generated on the repulsive plate and the movable core. In FIG. 2, 100 denotes coil current flowing when the coil 22 is energized, 101 denotes displacement of the movable electrode 12, 102 denotes a repulsive plate electromagnetic force generated on the repulsive plate 21, and 103 denotes a movable core electromagnetic force generated on the movable core 23. The displacement 101 of the movable electrode corresponds to displacement of the second movable shaft 15.

When current flows through the coil 22, the electromagnetic force 102 generated on the repulsive plate 21 sharply rises. By the electromagnetic force 102, the movable electrode 12, i.e., the second movable shaft 15 starts to move as shown by the displacement 101. Thereafter, the electromagnetic force 102 by the repulsive plate 21 reaches a peak.

On the other hand, the electromagnetic force 103 generated on the movable core 23 rises with a lag from the electromagnetic force 102 generated on the repulsive plate 21, and then reaches a peak. Therefore, in the vicinity of the closed position, the electromagnetic force 103 of the movable core 23 becomes great, that is, a force to move the movable electrode 12 toward the fixed electrode 11 via the second movable shaft 15 becomes great, thus suppressing chattering when the movable electrode 12 collides with the fixed electrode 11.

In FIG. 2, the vicinity of the closed position is the position of the movable electrode 12 at the time when the displacement 101 becomes flat.

When the movable electrode 12 collides with the fixed electrode 11, rebound of the movable electrode 12 is suppressed by an elastic force of the disk spring 30, whereby chattering can be further suppressed. At the time of closing, the disk spring 30 presses the second movable shaft 15 in the moving direction of the second movable shaft 15, thus contributing to suppression of chattering.

As shown in FIG. 2, the displacement 101 of the second movable shaft 15 is kept flat with almost no oscillation, after collision.

Regarding the repulsive plate 21, the electromagnetic force relationship shown in FIG. 2 can be adjusted by the material, conductivity, the radial-direction size from the movable shaft, the thickness, or the like thereof. Examples of the material include copper and aluminum. In light of rigidity as the driving member, a copper-based material is desirable. The size in the radial direction is set to be approximately equal to the diameter of the coil.

Regarding the movable core 23, the size in the radial direction is set to be approximately equal to or smaller than the diameter of the coil, and can be set together with the thickness thereof in consideration of the weight and drivability as an apparatus.

Opening operation is as follows.

After it is confirmed that contact-to-contact current conduction between the fixed electrode 11 and the movable electrode 12 is stopped, an opening operation is performed. As a mechanism for performing an opening operation, a simple manual mechanism may be provided. Although not shown, for example, the movable shaft 15 may be provided with a screw portion, and a feed mechanism for driving the movable shaft 15 in the opening direction by using the screw portion may be attached. In this case, it is desirable that the mechanism is detachable from the movable shaft 15 so as not to influence the closing operation. A link mechanism may be attached to the movable shaft and a handle that allows a manual opening operation may be attached. When the movable shaft 15 is moved to an opened-state position by using such a mechanism, the movable shaft 15 is kept at the opened position by the disk spring 30 which is an elastic member.

As described above, in the present embodiment 1, the electromagnetic actuator 3 has the repulsive plate 21 and the movable core 23 connected to the second movable shaft 15 so as to be opposed to each other with the coil 22 interposed therebetween. In a first state, the distance between the repulsive plate 21 and the coil 22 is set to be shorter than the distance between the movable core 23 and the coil 22, and the disk spring 30 connected to the second movable shaft 15 presses the second movable shaft 15. After the coil 22 is energized, when the second movable shaft 15 is operated so that a second state is established, the distance between the repulsive plate 21 and the coil 22 becomes longer than the distance between the movable core 23 and the coil 22, and the disk spring 30 is reversed to press the second movable shaft 15. Thus, by using two electromagnetic forces acting on the repulsive plate 21 and the movable core 23 in combination, it is possible to provide an electromagnetic actuator capable of high-speed operation with high efficiency as compared to the conventional technology.

In addition, the electromagnetic force on the movable core 23 reaches a peak with a lag from the electromagnetic force on the repulsive plate 21. Therefore, the electromagnetic force can be increased in the vicinity of the position to which the second movable shaft 15 moves at high speed by a predetermined distance, and thus rebound between the electrodes can be reduced. Further, owing to the elastic force of the disk spring 30, the second movable shaft 15 can stop with a small rebound after moving by the predetermined distance.

Only one coil 22 is provided for generating the electromagnetic forces on the repulsive plate 21 and the movable core 23. Therefore, it is possible to provide a small-sized electromagnetic actuator as compared to the conventional ones.

In embodiment 1, the switch 1 is configured such that the movable electrode 12 is connected to the second movable shaft 15 of the electromagnetic actuator 3 described above and the electromagnetic actuator 3 is used as a driving device for the vacuum switch 2 so that the movable electrode 12 collides with the fixed electrode 11 to perform a closing operation. Thus, since the electromagnetic force on the movable core 23 reaches a peak with a lag from the electromagnetic force on the repulsive plate 21, the electromagnetic force can be increased in the vicinity of the closed position, whereby rebound when the movable electrode 12 collides with the fixed electrode can be suppressed and chattering can be suppressed. Further, the elastic force of the disk spring 30 also acts, whereby chattering can be further suppressed.

Since the small-sized electromagnetic actuator which generates the electromagnetic forces on the repulsive plate 21 and the movable core 23 by one coil is used, the switch 1 can also be downsized.

### Embodiment 2

In the above embodiment 1, the movable core and the disk spring which is an elastic member are provided separately from each other. On the other hand, in the present embodiment 2, an example in which the movable core and the disk spring which is an elastic member are connected to each other and thus are connected to the second movable shaft will be described.

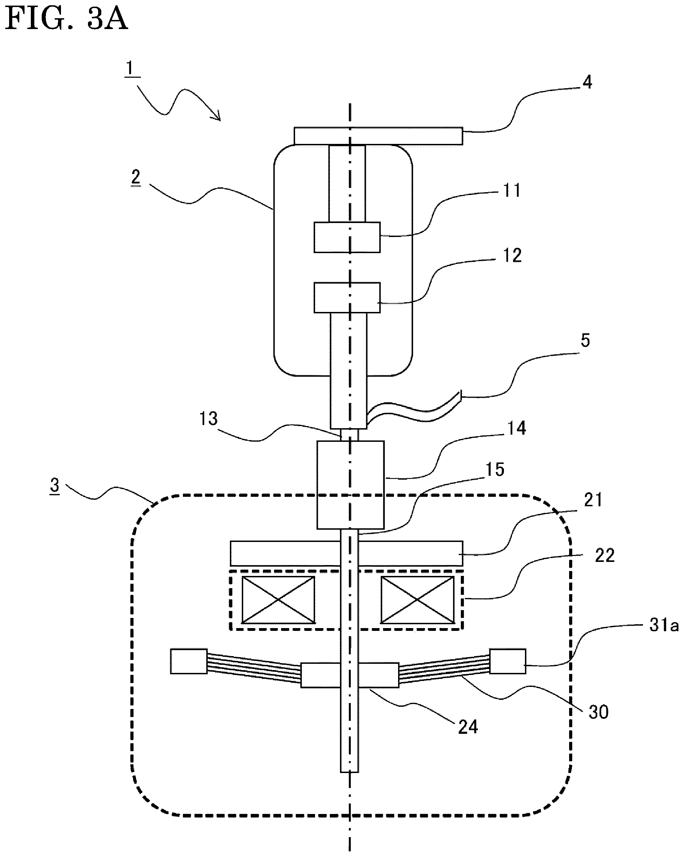

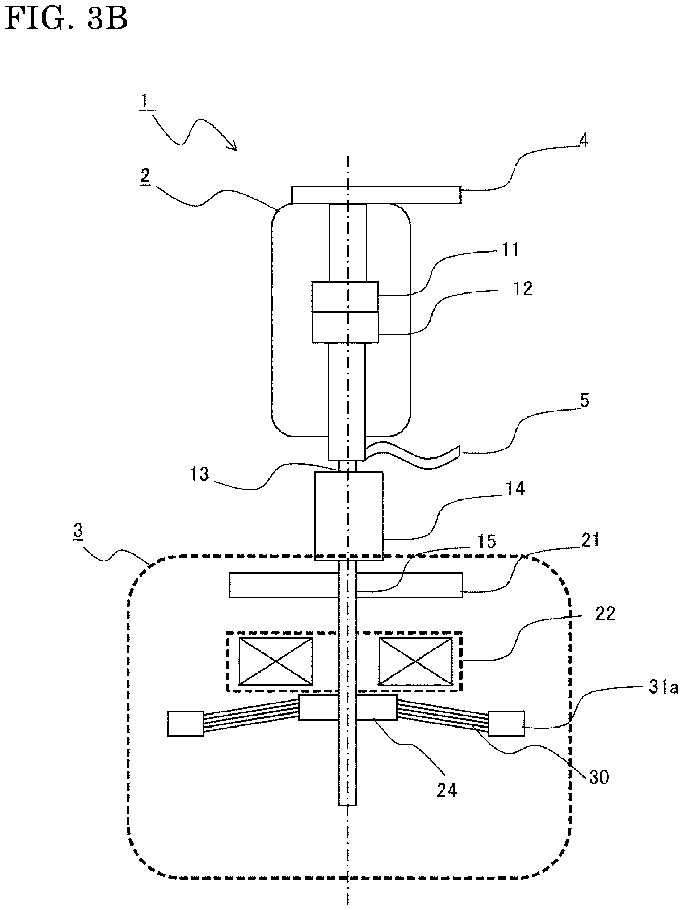

FIG. 3A and FIG. 3B are structure views of a switch according to embodiment 2. FIG. 3A shows an opened state. FIG. 3B shows a closed state.

In FIG. 3A and FIG. 3B, a switch 1 includes: a vacuum switch 2 having therein a fixed electrode 11 and a movable electrode 12 contactable with and separable from the fixed electrode 11 to form a closed/opened state; and an electromagnetic actuator 3 for driving a first movable shaft 13 having an end connected to the movable electrode 12 so as to open/close the vacuum switch.

The electromagnetic actuator 3 has a second movable shaft 15 connected to the first movable shaft 13 via an insulating connection rod 14, and in the electromagnetic actuator 3, a repulsive plate 21, a coil 22, and a movable core 24 are arranged in this order from the vacuum switch 2 side.

As in embodiment 1, the repulsive plate 21 is connected to the second movable shaft 15 and operates in the axial direction together with the second movable shaft 15. With a hollow part of the coil 22 interposed between the repulsive plate 21 and the movable core 24, the movable core 24 is connected to the second movable shaft 15. The movable core 24 also operates in the axial direction together with the second movable shaft 15.

In the opened state shown in FIG. 3A, the distance between the repulsive plate 21 and the coil 22 is set to be shorter than the distance between the movable core 24 and the coil 22. In the closed state shown in FIG. 3B, the distance between the repulsive plate 21 and the coil 22 is set to be longer than the distance between the movable core 24 and the coil 22.

In the present embodiment 2, the movable core 24 is connected to the inner peripheral end of the disk spring 30, thereby fixing the disk spring 30 to the second movable shaft 15. As in embodiment 1, the outer peripheral end of the disk spring 30 is fixed to the spring fixation member 31a, and thus the position of the outer peripheral end is kept even when the second movable shaft 15 is moved. In the opened state shown in FIG. 3A, the second movable shaft 15 is pressed at a position away from the vacuum switch 2 by the disk spring 30. In the closed state shown in FIG. 3B, the second movable shaft 15 is pressed at a position close to the vacuum switch 2 by the disk spring 30 reversing from the opened state, thus retaining the fixed electrode 11 and the movable electrode 12 in the vacuum switch 2 so that they are not separated from each other.

Operation of the electromagnetic actuator 3 is the same as in embodiment 1. When high-frequency pulse current is applied to the coil 22, a magnetic field is generated. With respect to the electromagnetic force due to the magnetic field, two electromagnetic forces acting on the repulsive plate 21 and the movable core 24 are used in combination.

First, the electromagnetic force on the repulsive plate 21 rises, and the second movable shaft 15 is driven by operation of the repulsive plate 21. The electromagnetic force on the movable core 24 reaches a peak with a lag from the electromagnetic force on the repulsive plate 21. Therefore, in the vicinity of the position to which the second movable shaft 15 moves at high speed by a predetermined distance, i.e., the vicinity of the position where the movable electrode 12 comes into contact with the fixed electrode 11, the electromagnetic force can be increased, whereby rebound between the electrodes can be reduced. Further, the second movable shaft 15 is held by the elastic force of the disk spring 30, whereby the second movable shaft 15 can stop with a small rebound after moving by the predetermined distance.

In embodiment 1, the movable core 23 and the disk spring 30 are individually connected to the second movable shaft 15, whereas, in embodiment 2, the movable core 24 serves also as a fixation member on the inner peripheral end side of the disk spring 30, and therefore the length in the movable shaft direction is shortened, leading to size reduction in the electromagnetic actuator 3 and the switch 1.

Meanwhile, in embodiment 2, since the movable core 24 serves also as a fixation member on the inner peripheral end side of the disk spring 30, the area of the movable core 23 that is opposed to the coil 22 is reduced. Therefore, in order to ensure the electromagnetic force generated on the movable core as shown in FIG. 2, it is also important to ensure the area of the movable core 24. However, considering the size of the movable core 24 as a fixation member for the disk spring 30, increase in the size makes it more difficult to ensure the elastic force of the disk spring 30 or leads to increase in the size of the disk spring 30.

Therefore, the size of the movable core 24 in the radial direction, i.e., the area thereof opposed to the coil 22 is set to the maximum area that can ensure a certain elastic force of the disk spring 30 without too much increase in the size of the disk spring 30, while the thickness of the movable core 24 is adjusted. The setting is to be made in consideration of the weight and drivability of the apparatus, i.e., the electromagnetic actuator 3 or the switch 1, while ensuring the electromagnetic force generated on the movable core 24.

Thus, the configuration of the present embodiment 2 provides the same effects as in embodiment 1. Further, the movable core 24 and the disk spring 30 which is an elastic member are connected to each other and thus are connected to the second movable shaft 15, and the movable core 24 is used as a fixation member on the inner peripheral end side of the disk spring 30. Thus, in addition to the effects of embodiment 1, the length in the movable shaft direction is shortened, thereby providing the electromagnetic actuator 3 or the switch 1 having a further reduced size.

In addition, the member for connecting the disk spring 30 which is an elastic member to the second movable shaft 15 is integrated with the movable core 24 which thus serves also as the connecting member, whereby increase in the weight of the movable part can be suppressed and increase in the size of the power supply (not shown) for energizing the coil 22 can also be suppressed.

### Embodiment 3

In the present embodiment 3, another example in which the movable core and the disk spring which is an elastic member are connected to each other and thus are connected to the second movable shaft as shown in embodiment 2 will be described.

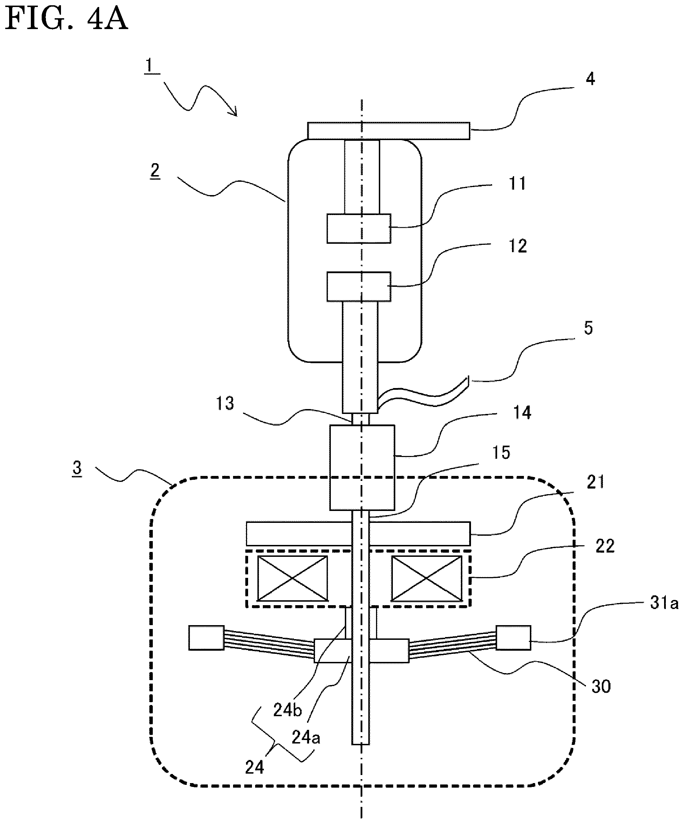

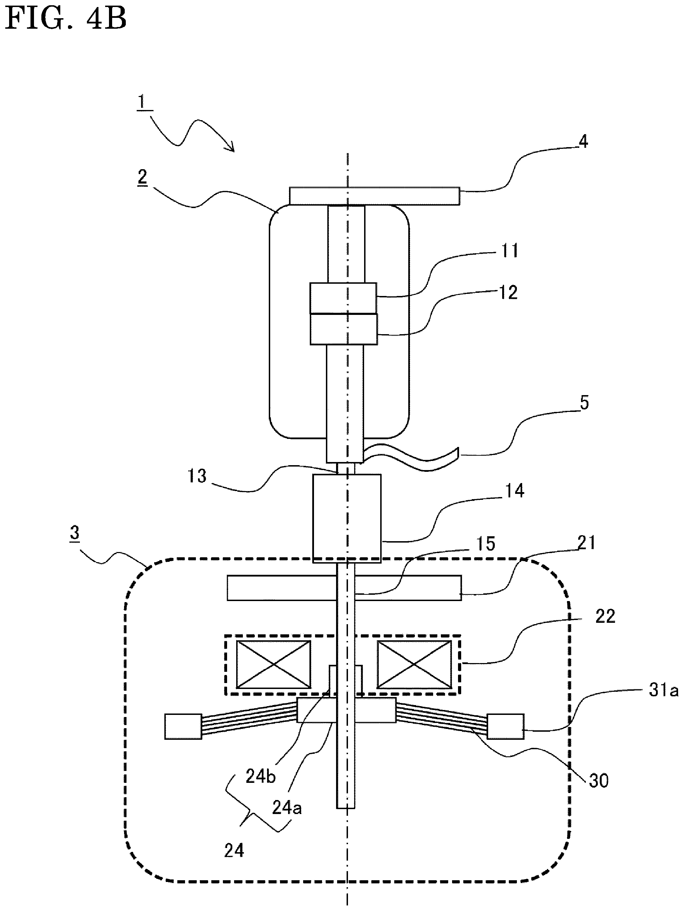

FIG. 4A and FIG. 4B are structure views of a switch according to embodiment 3. FIG. 4A shows an opened state. FIG. 4B shows a closed state.

In FIG. 4A and FIG. 4B, a switch 1 includes: a vacuum switch 2 having therein a fixed electrode 11 and a movable electrode 12 contactable with and separable from the fixed electrode 11 to form a closed/opened state; and an electromagnetic actuator 3 for driving a first movable shaft 13 having an end connected to the movable electrode 12 so as to open/close the vacuum switch.

The electromagnetic actuator 3 has a second movable shaft 15 connected to the first movable shaft 13 via an insulating connection rod 14, and in the electromagnetic actuator 3, a repulsive plate 21, a coil 22, and a movable core 24 are arranged in this order from the vacuum switch 2 side.

As in embodiment 1, the repulsive plate 21 is connected to the second movable shaft 15 and operates in the axial direction together with the second movable shaft 15. With a hollow part of the coil 22 interposed between the repulsive plate 21 and the movable core 24, the movable core 24 is connected to the second movable shaft 15. The movable core 24 also operates in the axial direction together with the second movable shaft 15.

In the present embodiment 3, the movable core 24 includes: a movable core 24a connected to the inner peripheral end of the disk spring 30, thereby serving to fix the disk spring 30 to the second movable shaft 15; and a movable core projection 24b projecting toward the coil 22 side.

As in embodiments 1 and 2, the outer peripheral end of the disk spring 30 is fixed to the spring fixation member 31a, and thus the position of the outer peripheral end is kept even when the second movable shaft 15 is moved. In the opened state shown in FIG. 4A, the second movable shaft 15 is pressed at a position away from the vacuum switch 2 by the disk spring 30. In the closed state shown in FIG. 4B, the second movable shaft 15 is pressed in a closed state of the vacuum switch 2 by the disk spring 30 reversing from the opened state, thus retaining the fixed electrode 11 and the movable electrode 12 in the vacuum switch 2 so that they are not separated from each other.

In addition, in the opened state shown in FIG. 4A, the distance between the repulsive plate 21 and the coil 22 is set to be shorter than the distance between the movable core 24a and the coil 22, and in the closed state shown in FIG. 4B, the distance between the repulsive plate 21 and the coil 22 is set to be longer than the distance between the movable core 24a and the coil 22.

Operation of the electromagnetic actuator 3 is the same as in embodiments 1 and 2. When high-frequency pulse current is applied to the coil 22, a magnetic field is generated. With respect to the electromagnetic force due to the magnetic field, two electromagnetic forces acting on the repulsive plate 21 and the movable core 24 are used in combination.

First, the electromagnetic force on the repulsive plate 21 rises, and the second movable shaft 15 is driven by operation of the repulsive plate 21. The electromagnetic force on the movable core 24 reaches a peak with a lag from the electromagnetic force on the repulsive plate 21. Therefore, in the vicinity of the position to which the second movable shaft 15 moves at high speed by a predetermined distance, i.e., the vicinity of the position where the movable electrode 12 comes into contact with the fixed electrode 11, the electromagnetic force can be increased, whereby rebound between the electrodes can be reduced. Further, the second movable shaft 15 is held by the elastic force of the disk spring 30, whereby the second movable shaft 15 can stop with a small rebound after moving by the predetermined distance.

Next, the size and the shape of the movable core will be described.

For increasing an attraction force acting on the movable core, it is necessary to consider the following fact so that response is not lowered due to weight increase and coil inductance increase. If the coil inductance is excessively increased, rising of the coil current shown in FIG. 2 is lowered and thus the electromagnetic force on the repulsive plate is also reduced, so that response might be deteriorated on the contrary.

It is desirable that the diameter of the movable core shown in embodiment 1 is approximately equal to the outer diameter of the coil, and if the diameter is excessively large, the weight and the coil inductance increase. The thickness needs to be set considering the intensity for the electromagnetic force.

It is difficult to make the diameter of the movable core shown in embodiment 2 approximately equal to the outer diameter of the coil. Therefore, weight increase, coil inductance increase, and the intensity of the electromagnetic force are adjusted by the thickness.

In the movable core 24 having the projection shown in the present embodiment 3, it is desirable that the projection height of the movable core projection 24b is set such that the projection end is flush with the coil surface at an opened position. If the projection height is excessively great, the weight and the coil inductance increase. In addition, the outer diameter of the movable core projection 24b is set to be smaller than the inner diameter of the coil 22 so that the movable core projection 24b can enter the hollow part of the coil 22 at a closed position.

Thus, the configuration of the present embodiment 3 provides the same effects as in embodiments 1 and 2.

Further, the movable core 24 has the movable core projection 24b projecting to the inner-diameter side of the coil 22. Thus, it is possible to increase the electromagnetic force on the movable core 24 and increase the entire output of the electromagnetic actuator 3, without increasing the apparatus size.

### Embodiment 4

In embodiments 1 to 3, examples in which the disk spring is used as an elastic member have been shown. However, other elastic members may be employed.

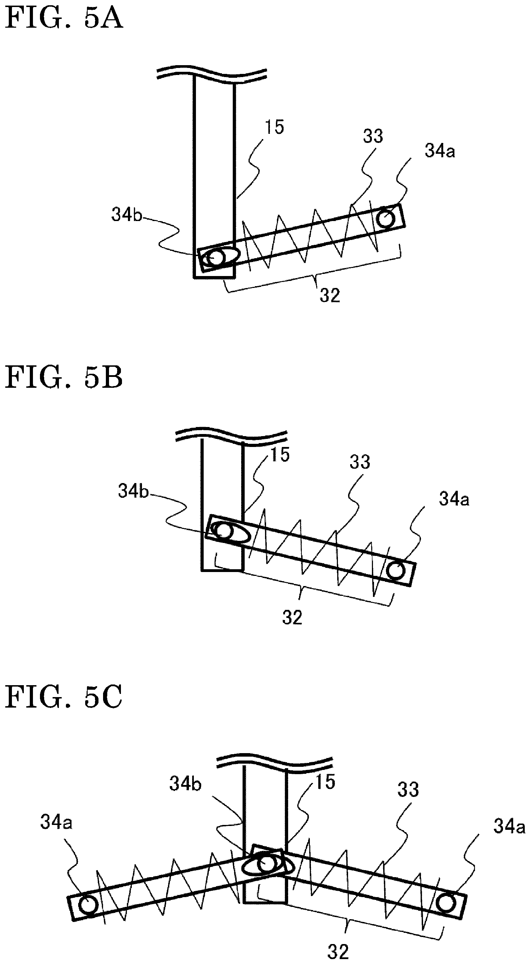

FIG. 5A and FIG. 5B are views showing the structure of a part of a switch according to embodiment 4, and show an example in which a link mechanism 32 is used instead of the disk spring 30 which is an elastic member and the spring fixation members 31a, 31b shown in FIG. 1A and FIG. 1B in embodiment 1. FIG. 5A shows an opened state, and FIG. 5B shows a closed state.

In the drawings, the link mechanism 32 includes a spring 33, a fixation member 34a which rotatably fixes one end of the spring 33, and a fixation member 34b which rotatably fixes the other end of the spring 33 to the second movable shaft 15. Between the opened position shown in FIG. 5A and the closed position shown in FIG. 5B, the direction of the spring 33 is changed, and thus the direction of a force acting on the second movable shaft 15 is reversed.

For example, in the case where the spring 33 is a compression spring, the force of the spring 33 acts on the second movable shaft 15 so as to press the second movable shaft 15 in the opening direction at the opened position and in the closing direction at the closed position.

FIG. 5C shows an example in a closed state in the case where a plurality of the link mechanisms 32 are arranged at positions symmetry with respect to the second movable shaft 15. Such arrangement enables equal forces to be applied in the axial direction of the second movable shaft 15.

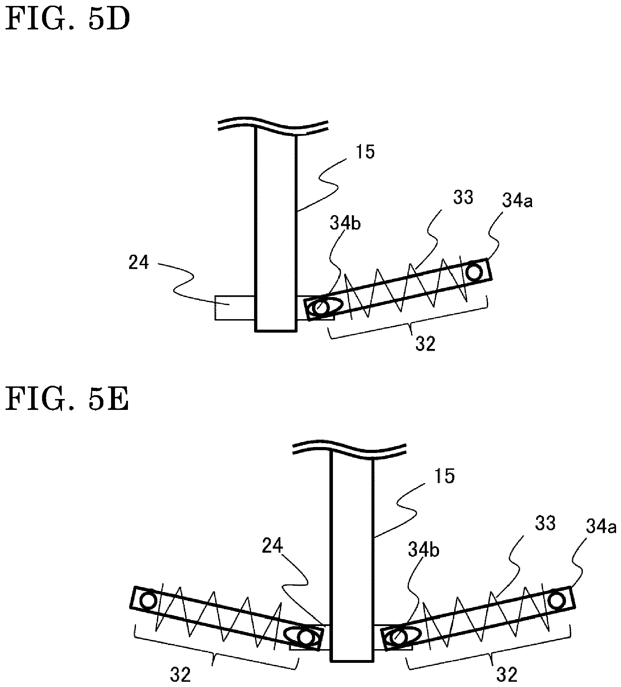

As in the case of the disk spring shown in embodiment 2, the fixation member 34b of the spring 33 may be provided to the movable core 24 connected to the second movable shaft 15. FIG. 5D and FIG. 5E show examples in an opened state in the case where the fixation member 34b of the spring 33 is provided to the movable core 24 connected to the second movable shaft 15.

In FIG. 5D and FIG. 5E, as a matter of course, the movable core projection 24b may be provided to the movable core 24 as in embodiment 3.

Next, an example in which a magnetic latch mechanism is used will be described.

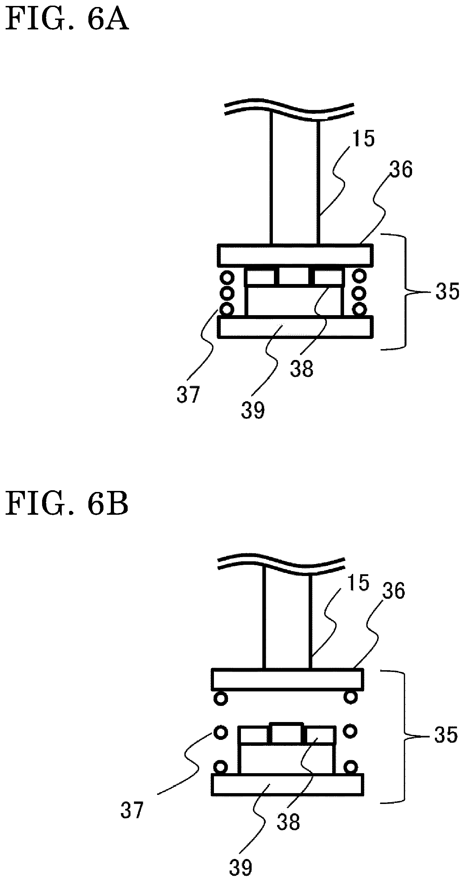

FIG. 6A and FIG. 6B are views showing another structure of a part of the switch according to embodiment 4, and show an example in which a magnetic latch mechanism 35 is used instead of the disk spring 30 which is an elastic member and the spring fixation members 31a, 31b shown in FIG. 1A and FIG. 1B in embodiment 1. FIG. 6A shows an opened state, and FIG. 6B shows a closed state.

In the drawings, the magnetic latch mechanism 35 is configured such that an attraction plate 36 connected to the second movable shaft 15 is attracted and retained to the fixed core 39 by a magnetic force of a permanent magnet 38, whereby an opened state is kept with a closing spring 37 compressed. On the other hand, in a closing operation, when the attraction plate 36 is pulled apart, the gap between the permanent magnet 38 and the attraction plate 36 is expanded, so that the magnetic force is weakened, and the force of the closing spring 37 acts on the movable shaft 15 in the closing direction.

The attraction plate 36 is made of a magnetic material and desirably has a high resistivity. In the present embodiment, an iron-based attraction plate is used.

As described above, an example in which the link mechanism is used and an example in which the magnetic latch mechanism is used have been shown as elastic members other than the disk spring. In either example, it is possible to apply a force to the movable shaft 15 in the opening direction at an opened position and in the closing direction at the closed position, as in the case of the disk spring.

Thus, the configuration of the present embodiment 4 provides the same effects as in embodiments 1 to 3.

Although an opening operation is not shown in the above embodiments 2 to 4, as a matter of course, the opening operation can be performed in the same manner as in embodiment 1.

### Embodiment 5

In the present embodiment 5, an example of a switchgear to which the switch described in any of embodiments 1 to 4 is mounted as a high-speed switch will be described.

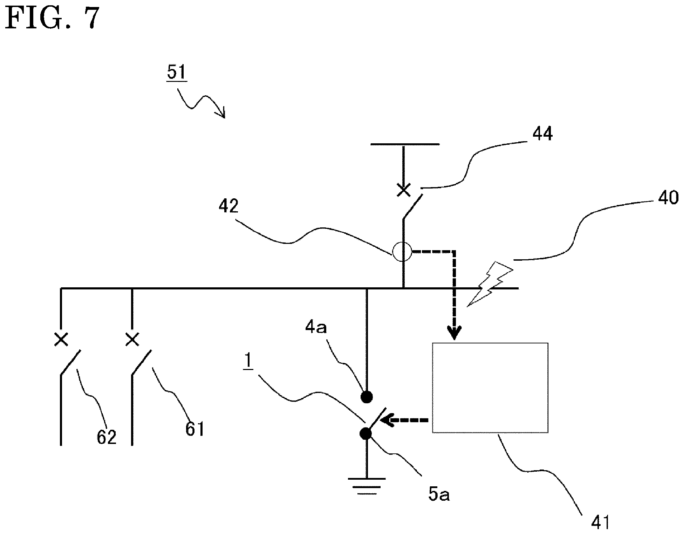

FIG. 7 is a schematic view showing the structure of a switchgear 51 according to embodiment 5.

In FIG. 7, a circuit breaker 44 is provided between a high-order system and the downstream side, and a current sensor 42 is connected on the downstream side of the circuit breaker 44. Inputted power is transmitted to the downstream side and leads to a low-order distribution board via downstream circuit breakers 61, 62.

The switch 1 is connected in parallel to the downstream circuit breakers 61, 62. When an arc detection unit 41 detects an arc occurrence position 40, the switch 1 operates in response to the corresponding signal.

An example in which two downstream circuit breakers 61, 62 are provided is shown, but the number of downstream circuit breakers is not limited to two.

In FIG. 7, the switch 1 is any of the switches 1 shown in embodiments 1 to 4.

In FIG. 7, the terminal 4 of the switch 1 is connected to a terminal 4a and the terminal 5 of the switch 1 is connected to a terminal 5a, and the terminal 4a serves as a high-voltage-side terminal and the terminal 5a serves as a ground-side terminal. In the case where the switch 1 is mounted to the switchgear 51, since the terminal 5a is used as a ground-side terminal, the connection rod 14 connecting the first movable shaft 13 and the second movable shaft 15 does not necessarily need to be an insulating material.

Next, operation will be described.

When short-circuit occurs at the arc occurrence position 40 and an arc occurs, the current sensor 42 detects change in current. When the arc detection unit 41 has received information from the current sensor 42, the arc detection unit 41 transmits a command for closing to a control system (not shown) for the switch 1, whereby the switch 1 is closed. The circuit in the switchgear 51 is grounded, short-circuit current flows to the ground, and the arc is immediately eliminated.

In the case where a short-circuit accident has occurred, current is supplied from the upstream side until power is interrupted by the upstream circuit breaker 44, so that damage in the switchgear 51 progresses due to the arc. Therefore, it is desired to ground the short-circuit current at high speed by the time when the circuit breaker 44 operates. Grounding the short-circuit current at high speed enables reuse of devices in the switchgear 51.

In the present embodiment, since any of the switches 1 shown in embodiments 1 to 4 is mounted as a high-speed switch, grounding can be performed at high speed after occurrence of an arc and chattering at the time of closing is suppressed, thus enabling restoration and plural times of usage as a high-speed switch. Since the switch is mounted inside the board, size reduction is required. The switch 1 according to the present embodiment has a reduced size as compared to the conventional ones, and thus satisfies such requirements.

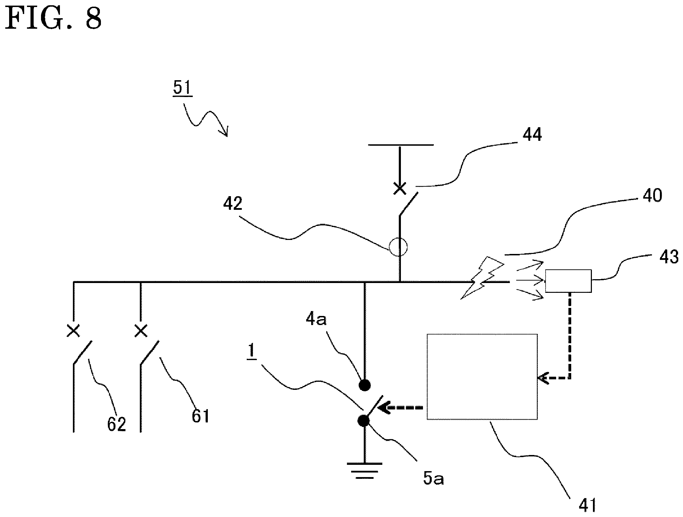

In FIG. 7, an example in which current change due to short-circuit current is detected using a known current sensor has been shown as an arc detection method. However, an arc may be detected by means of light, as shown in FIG. 8.

FIG. 8 is a schematic view showing another structure of the switchgear 51. In FIG. 8, when a short-circuit accident has occurred, an arc detection sensor 43 detects light due to an arc at an arc occurrence position 40, and transmits information thereof to an arc detection unit 41. The arc detection unit 41 transmits a command for closing to a control system (not shown) for the switch 1, whereby the switch 1 is closed. Short-circuit current flows to the ground, and the arc is immediately eliminated.

Occurrence of an arc may be detected using the current sensor 42 in FIG. 7 and the arc detection sensor 43 which detects light in FIG. 8 in combination. Further, the detection method is not limited to a method using current or light, as long as an arc can be detected.

The arc detection unit 41 stores, in advance, the value of current flowing in the switchgear 51 in a steady state, an allowable change range thereof, etc., for example. Thus, the arc detection unit 41 compares the value detected by the current sensor 42 when an arc has occurred, with the above value, range, etc., to perform arc occurrence determination. In addition, the arc detection unit 41 stores data of light emission due to an arc, for example, and thus performs arc occurrence determination on the basis of light emission information from the arc detection sensor 43. When the arc detection unit 41 determines that an arc has occurred, the arc detection unit 41 transmits a closing command to the switch 1.

In FIGS. 7 and 8, a signal from the arc detection unit 41 is transmitted to the switch 1. This signal is also transmitted to the circuit breaker 44 at the same time. The short-circuit current is grounded by the switch 1 which is a high-speed switch, to eliminate the arc, and thereafter, interruption from the upstream side is performed by the circuit breaker 44, whereby the switchgear 51 is protected.

Until interruption by the circuit breaker 44, the movable electrode 12 of the switch 1 is pressed in the closing direction by the electromagnetic force on the movable core or by the elastic member.

An opening operation in a restoration work after the accident is as follows. In a power stopped state, an opening operation can be performed at low speed. Therefore, a manual opening mechanism may be attached to the movable shaft. Although not shown, for example, the movable shaft 15 may be provided with a screw portion, and a feed mechanism for driving the movable shaft 15 in the opening direction by using the screw portion may be attached. It is desirable that the mechanism is detachable from the movable shaft 15 so as not to influence the closing operation. Alternatively, a link mechanism may be attached to the movable shaft and a handle that allows a manual opening operation may be attached.

As described above, in the configuration of the present embodiment 5, any of the switches described in embodiments 1 to 4 which are high-speed switches is mounted to the switchgear 51. Therefore, the switch has a reduced size and can be provided inside a predetermined board of the switchgear 51. In addition, the electromagnetic actuator of the switch operates at high speed to close the switch. Therefore, when an arc has occurred, the arc is immediately eliminated, whereby damage in the switchgear 51 can be reduced. In addition, since chattering is suppressed in the mounted switch, damage on contact surfaces of the movable electrode and the fixed electrode at the time of closing is suppressed, thus enabling plural times of usage.

Further, since an arc occurrence accident can be immediately calmed down, the restoration time after the accident can be shortened and operation confirmation can be performed. Thus, it becomes possible to provide a switchgear with high reliability.

In the above embodiments 1 to 5, the case where the switch 1 has the vacuum switch 2 has been described. Using such a vacuum switch having electrodes provided in a vacuum container has an advantage that the gap at the time of opening can be reduced.

In the case of a switchgear or a distribution board having a comparatively low rated voltage, e.g., about 400 V or less, a switch in which gas or air is sealed may be used without having to use a vacuum switch.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

### DESCRIPTION OF THE REFERENCE CHARACTERS

1 switch
2 vacuum switch
3 electromagnetic actuator
4, 4a, 5, 5a terminal
11 fixed electrode
12 movable electrode
13 first movable shaft
14 connection rod
15 second movable shaft
21 repulsive plate
22 coil
23, 24, 24a movable core
24b movable core projection
30 disk spring
31a, 31b spring fixation member
32 link mechanism
33 spring
34a, 34b fixation member
35 magnetic latch mechanism
36 attraction plate
37 closing spring
38 permanent magnet
39 fixed core
40 arc occurrence position
41 arc detection unit
42 current sensor
43 arc detection sensor
44 circuit breaker
51 switchgear
61, 62 circuit breaker
100 coil current
101 displacement
102 repulsive plate electromagnetic force
103 movable core electromagnetic force

## Claims

1. An electromagnetic actuator (3) comprising:
a repulsive plate (21), a coil (22) and a movable core (23,24,24a) connected to a movable shaft (15) penetrating the coil (22), and provided so as to be opposed to each other with the coil (22) interposed therebetween; and
an elastic member (30,32,35) having an end connected to the movable shaft (15) via the movable core(23,24,24a), and another end fixed, wherein
in a first state, a distance between the repulsive plate (21) and the coil (22) is smaller than a distance between the movable core (23,24,24a) and the coil (22),
when the coil (22) is energized and the movable shaft (15) moves with the repulsive plate (21) repelling the coil (22) due to an electromagnetic force acting on the repulsive plate (21) so that a second state is established, the distance between the repulsive plate (21) and the coil (22) becomes greater than the distance between the movable core (23,24,24a) and the coil (22), and the movable shaft (15) is pressed by the elastic member (30,32,35) in a moving direction of the movable shaft (15) so as to separate the repulsive plate (21) from the coil (22),
**characterized in that**
the movable core (24) has a projection (24b) projecting toward the coil (22) along the movable shaft (15), and an outer diameter of the projection (24b) of the movable core (24) is smaller than an inner diameter of the coil (22).

2. The electromagnetic actuator (3) according to claim 1, wherein
the elastic member (30,32,35) is a disk spring (30).

3. A switch (1) comprising:
the electromagnetic actuator (3) according to claim 1 or 2; and
a switch unit including a movable electrode (12) connected to a repulsive plate (21) side end of the movable shaft (15) penetrating the coil (22) and connected with the repulsive plate (21) and the movable core (23,24,24a), and a fixed electrode (11) contactable with and separable from the movable electrode (12), wherein
the first state is an opened state, and the second state is a closed state.

4. The switch (1) according to claim 3, wherein
the switch unit is a vacuum switch (2) having the movable electrode (12) and the fixed electrode (15) stored in a vacuum container.

5. A switchgear (51) comprising:
the switch (1) according to claim 3 or 4; and
an arc detection unit (41), wherein
when an arc is detected by the arc detection unit (41), a circuit is grounded by the switch (1).

## Patentansprüche

1. Elektromagnetischer Aktuator (3) aufweisend:
eine Abweisplatte (21), eine Spule (22) und einen beweglichen Kern (23, 24, 24a), der mit einer die Spule (22) durchdringenden beweglichen Welle (15) verbunden ist, und derart vorgesehen ist, dass er sich gegenüber der Spule (22) befindet, wobei die Spule (22) dazwischen angeordnet ist; und
ein elastisches Element (30, 32, 35), das ein Ende aufweist, das über den beweglichen Kern (23, 24, 24a) mit der beweglichen Welle (15) verbunden ist, und ein anderes Ende aufweist, das befestigt ist, wobei
in einem ersten Zustand der Abstand zwischen der Abweisplatte (21) und der Spule (22) kleiner ist als der Abstand zwischen dem beweglichen Kern (23, 24, 24a) und der Spule (22),
wenn die Spule (22) erregt wird und die bewegliche Welle (15) sich mit der Abweisplatte (21) bewegt, indem die Spule (22) aufgrund einer auf die Abweisplatte (21) wirkenden elektromagnetischen Kraft abgestoßen wird, sodass ein zweiter Zustand hergestellt wird, der Abstand zwischen der Abweisplatte (21) und der Spule (22) größer wird als der Abstand zwischen dem beweglichen Kern (23, 24, 24a) und der Spule (22), und die bewegliche Welle (15) durch das elastische Element (30, 32, 35) in eine Bewegungsrichtung der beweglichen Welle (15) gedrückt wird, um die Abweisplatte (21) von der Spule (22) zu trennen,
**dadurch gekennzeichnet, dass**
der bewegliche Kern (24) einen Vorsprung (24b) aufweist, der sich entlang der beweglichen Welle (15) in Richtung der Spule (22) erstreckt, und der Außendurchmesser des Vorsprungs (24b) des beweglichen Kerns (24) kleiner ist als der Innendurchmesser der Spule (22).

2. Elektromagnetischer Aktuator (3) nach Anspruch 1, wobei
das elastische Element (30, 32, 35) eine Tellerfeder (30) ist.

3. Schalter (1) aufweisend:
den elektromagnetischen Aktuator (3) nach Anspruch 1 oder 2; und
eine Schalteinheit, die eine bewegliche Elektrode (12) umfasst, die mit dem an der Abweisplattenseite (21) befindlichen Ende der die Spule (22) durchdringenden beweglichen Welle (15) verbunden ist und mit der Abweisplatte (21) und dem beweglichen Kern (23, 24, 24a) verbunden ist, und eine feststehende Elektrode (11), die mit der beweglichen Elektrode (12) in Kontakt gebracht oder von dieser getrennt werden kann, wobei
der erste Zustand ein offener Zustand und der zweite Zustand ein geschlossener Zustand ist.

4. Schalter (1) nach Anspruch 3, wobei
die Schalteinheit ein Vakuumschalter (2) ist, der die bewegliche Elektrode (12) und die feststehende Elektrode (15) in einem Vakuumbehälter aufweist.

5. Schaltgerät (51) aufweisend:
den Schalter (1) nach Anspruch 3 oder 4; und
eine Lichtbogendetektionseinheit (41), wobei
wenn ein Lichtbogen durch die Lichtbogendetektionseinheit (41) erkannt wird, ein Stromkreis durch den Schalter (1) geerdet wird.

## Revendications

1. Actionneur électromagnétique (3) comprenant :
une plaque répulsive (21), une bobine (22) et un noyau mobile (23, 24, 24a) reliés à un arbre mobile (15) pénétrant dans la bobine (22), et disposés pour être opposés l'un à l'autre, la bobine (22) étant interposée entre eux ; et
un élément élastique (30, 32, 35) ayant une extrémité reliée à l'arbre mobile (15) par l'intermédiaire du noyau mobile (23, 24, 24a), et une autre extrémité fixe, dans lequel
dans un premier état, une distance entre la plaque répulsive (21) et la bobine (22) est plus petite qu'une distance entre le noyau mobile (23, 24, 24a) et la bobine (22),
lorsque la bobine (22) est alimentée et que l'arbre mobile (15) se déplace avec la plaque répulsive (21) repoussant la bobine (22) en raison d'une force électromagnétique agissant sur la plaque répulsive (21) de sorte qu'un second état est établi, la distance entre la plaque répulsive (21) et la bobine (22) devient supérieure à la distance entre le noyau mobile (23, 24, 24a) et la bobine (22), et l'arbre mobile (15) est pressé par l'élément élastique (30, 32, 35) dans une direction de déplacement de l'arbre mobile (15) de manière à séparer la plaque répulsive (21) de la bobine (22),
**caractérisé en ce que**
le noyau mobile (24) a une saillie (24b) faisant saillie vers la bobine (22) le long de l'arbre mobile (15), et un diamètre externe de la saillie (24b) du noyau mobile (24) est plus petit qu'un diamètre interne de la bobine (22).

2. Actionneur électromagnétique (3) selon la revendication 1, dans lequel l'élément élastique (30, 32, 35) est un ressort à disque (30).

3. Commutateur (1) comprenant :
l'actionneur électromagnétique (3) selon la revendication 1 ou 2 ; et
une unité de commutation comportant une électrode mobile (12) connectée à une extrémité côté plaque répulsive (21) de l'arbre mobile (15) pénétrant dans la bobine (22) et connectée à la plaque répulsive (21) et au noyau mobile (23, 24, 24a), et une électrode fixe (11) pouvant être en contact avec l'électrode mobile (12) et pouvant être séparée de celle-ci, dans lequel
le premier état est un état ouvert, et le second état est un état fermé.

4. Commutateur (1) selon la revendication 3, dans lequel
l'unité de commutation est un commutateur sous vide (2) dont l'électrode mobile (12) et l'électrode fixe (15) sont stockées dans un contenant sous vide.

5. Appareillage de commutation (51) comprenant :
le commutateur (1) selon la revendication 3 ou 4 ; et
une unité de détection d'arc (41), dans lequel
lorsqu'un arc est détecté par l'unité de détection d'arc (41), un circuit est mis à la terre par le commutateur (1).
